(19) Europäisches Patentamt
European Patent Office
Office européen des brevets

(11) **EP 2 435 188 B1**

(12) **EUROPÄISCHE PATENTSCHRIFT**

(45) Veröffentlichungstag und Bekanntmachung des Hinweises auf die Patenterteilung:
**04.09.2013 Patentblatt 2013/36**

(21) Anmeldenummer: **10721805.9**

(22) Anmeldetag: **28.05.2010**

(51) Int Cl.:
**B04B 1/20** (2006.01)        **B04B 9/08** (2006.01)

(86) Internationale Anmeldenummer:
**PCT/EP2010/057377**

(87) Internationale Veröffentlichungsnummer:
**WO 2010/139610 (09.12.2010 Gazette 2010/49)**

(54) **VERFAHREN ZUM ERMITTELN DES DREHMOMENTES EINER SCHNECKE EINES DEKANTERS**

METHOD FOR DETERMINING THE TORQUE OF A WORM OF A DECANTER

PROCÉDÉ POUR DÉTERMINER LE COUPLE D'UNE VIS D'UN DÉCANTEUR

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **30.05.2009 DE 102009023555**

(43) Veröffentlichungstag der Anmeldung:
**04.04.2012 Patentblatt 2012/14**

(73) Patentinhaber: **GEA Mechanical Equipment GmbH 59302 Oelde (DE)**

(72) Erfinder: **OVERBERG, Martin 33442 Herzebrock-Clarholz (DE)**

(74) Vertreter: **Specht, Peter et al Loesenbeck - Specht - Dantz Patent- und Rechtsanwälte Am Zwinger 2 33602 Bielefeld (DE)**

(56) Entgegenhaltungen:
**DE-A1- 4 107 485     US-A- 5 011 458**

**Beschreibung**

Die Erfindung betrifft ein Verfahren zum Ermitteln des Drehmomentes einer Schnecke einer eine Trommel und die mit einer Differenzdrehzahl zur Trommel drehbare Schnecke aufweisenden Vollmantelschneckenzentrifuge, die über eine Getriebeanordnung von einem gemeinsamen einzigen Antriebsmotor über einen oder mehrere Riementriebe angetrieben werden. Ein solches Verfahren ist bereits aus DE-A-4107485 bekannt.

Während die Messung des Schneckendrehmoments bei einem zweimotorigen Betrieb über die Leistungs- oder Stromaufnahme des Sekundärmotors ermittelt werden konnte, kann bei Vollmantelschneckenzentrifugen mit einmotorigem Betrieb bisher lediglich in Sonderfällen mit konstanten Betriebsbedingungen durch Abschätzung anhand des Hauptmotorstroms eine näherungsweise Angabe des Schneckendrehmoments erfolgen. Diese Schätzung ist relativ ungenau und zudem nicht immer bzw. in allen Fällen möglich.

Die Lösung des Problems ist die Aufgabe der Erfindung.

Die Erfindung löst dieses Problem durch das im Anspruch 1 angegebene Verfahren.

Vorteilhafte Ausgestaltungen sind den Unteransprüchen zu entnehmen.

Nach dem Gegenstand der Erfindung wird das Drehmoment der Schecke über eine Ermittlung des Schlupfs eines Riementriebs bestimmt, mit welchem ein Drehmoment in das Getriebe eingeleitet wird.

Diese Art der Ermittlung ist einfach und unkompliziert und dennoch auch für Steuerungsaufgaben genügen präzise.

Diese Drehmomentsermittlung über eine Ermittlung des Schlupfs des Riementriebs kann für eine Anzeige genutzt werden und ggf. auch zur manuellen oder elektronischen Steuerung oder für eine Überlastabschaltung herangezogen werden.

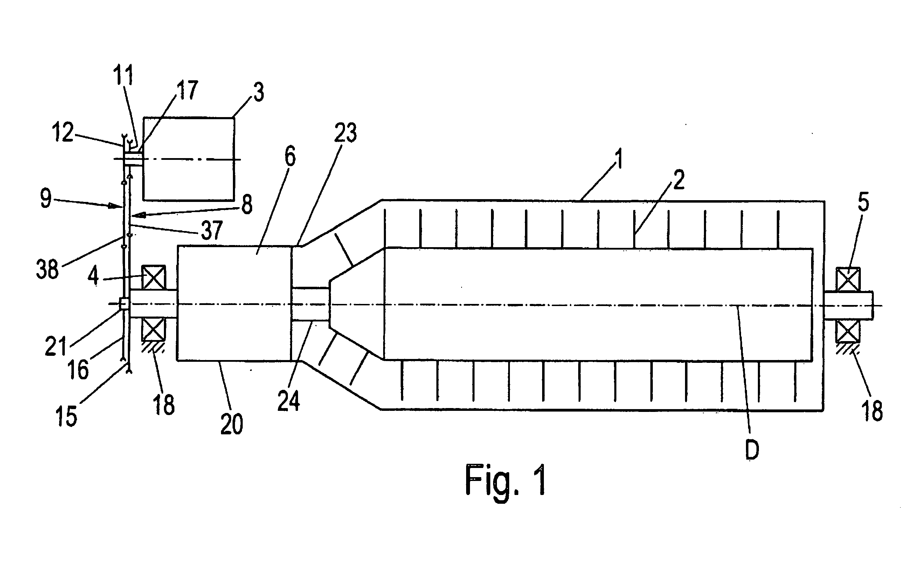

Dabei ist die Erfindung für verschiedene Antriebsvarianten geeignet, insbesondere für die in den Fig. 1 bis 3 dargestellten verschiedenen Antriebs- und Getriebevarianten mit jeweils nur einem einzigen Antriebsmotor.

Es ist ferner vorteilhaft, wenn bei der Bestimmung des Drehmomentes ein Leerlaufdrehmoment bzw. das bei der Bestimmung der Übersetzung $i_{12}$ vorhandene Drehmoment berücksichtigt wird.

Nachfolgend wird die Erfindung anhand von Ausführungsbeispielen unter Bezug auf die Zeichnung näher erläutert. Es zeigen:

Fig. 1 eine schematische Darstellung einer ersten VollmantelSchneckenzentrifuge;
Fig. 2 eine schematische Darstellung einer zweiten VollmantelSchneckenzentrifuge;
Fig. 3 eine schematische Darstellung einer dritten VollmantelSchneckenzentrifuge;
Fig. 4 ein Diagramm zur Veranschaulichung der Wirkungsweise der Erfindung.

Die Figuren 1, 2 und 3 zeigen jeweils eine Vollmantel-Schneckenzentrifuge-auch Dekanter genannt - mit einer drehbaren Trommel 1 mit einer vorzugsweise horizontalen Drehachse D und einer innerhalb der Trommel 1 angeordneten ebenfalls drehbaren Schnecke 2 sowie mit einem Antriebsmotor 3 zum Drehen der Trommel 1 und der Schnecke 2.

Die Trommel 1 der Figur 1 ist zwischen einem antriebsseitigen und einem antriebsabgewandten Trommellager 4, 5 angeordnet und mit diesen Trommellagern 4, 5 an einem nicht im Detail dargestellten Maschinengestell/Fundament 18 drehbar gelagert.

Zum Antrieb dient der Antriebsmotor 3 mit der Abtriebswelle 17, auf der zwei Riemenscheiben 11 und 12 axial zueinander versetzt angeordnet sind.

Die erste Riemenscheibe 11 treibt als treibende Scheibe eines ersten Riementriebs 8 über einen Riemen 37 eine getriebene Riemenscheibe 15 auf einer ersten Getriebeeingangswelle 20 einer Getriebeanordnung 6 an.

Die zweite Riemenscheibe 12 treibt entweder als treibende Scheibe eines zweiten Riementrieb 9 über einen weiteren Riemen 38 und die getriebene Riemenscheibe 16 eine zweite Getriebeeingangswelle 21 der Getriebeanordnung 6 an oder wirkt bremsend. Der Riementrieb 9, der auf die kleine Eingangswelle des Getriebes geht, prägt dieser dabei in erster Linie eine bestimmte Drehzahl auf. Er kann daher treiben oder bremsen.

Die Getriebeanordnung 6 überträgt diese Drehmomente über geeignete Getriebeelemente z.B. nach Art eines Cyclogetriebes oder nach Art eines Planetengetriebes an Abtriebswellen 23, 24 auf die Trommel 1 und die Schnecke 2 und sorgt zusätzlich für eine Differenzdrehzahl zwischen diesen beiden rotierenden Elementen.

In Fig. 1 ist die gesamte Getriebeanordnung 6 beispielhaft zwischen den Trommellagem 4, 5 als eine einzige Getriebestufe oder mehrere integrierte Getriebestufen abgebildet und dient zur Erzeugung einer Drehzahldifferenz zwischen Spindel 2 und Trommel 1.

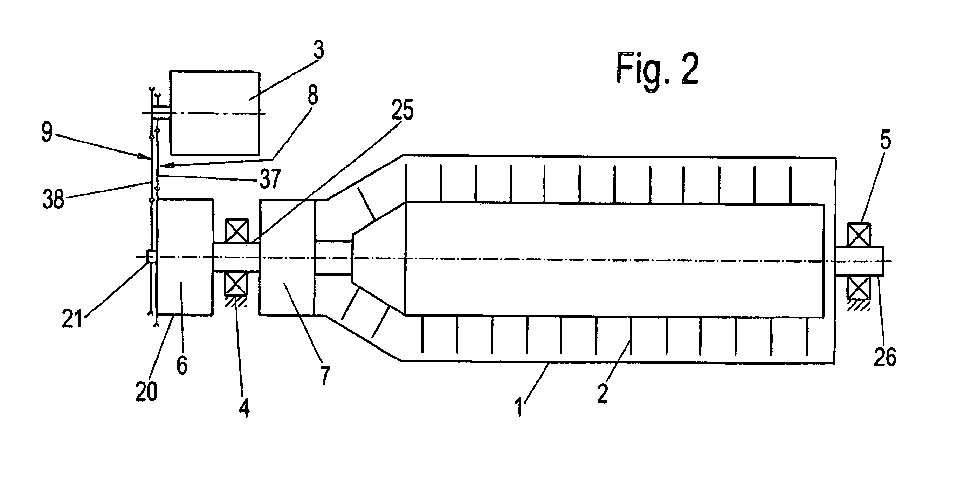

In Figur 2 ist beispielhaft eine Antriebsvorrichtung mit einer Getriebeanordnung mit zwei Riementrieben 8, 9 und Getriebestufen 6 und 7 abgebildet, wobei eines der beiden Trommellager 4 beispielhaft axial zwischen den zwei Getriebestufen 6, 7 an einer Welle 25 angeordnet ist und das andere Trommellager 5 axial außerhalb des anderen axialen Endes der Trommel 2 am Spindel(abschnitt) 26 angeordnet ist.

Theoretisch ist auch eine axiale Anordnung einer Getriebeanordnung denkbar, in der die gesamte Getriebeanordnung außerhalb des axialen Bereichs angeordnet ist, welcher durch die Trommellager 4, 5 begrenzt wird (hier nicht dargestellt).

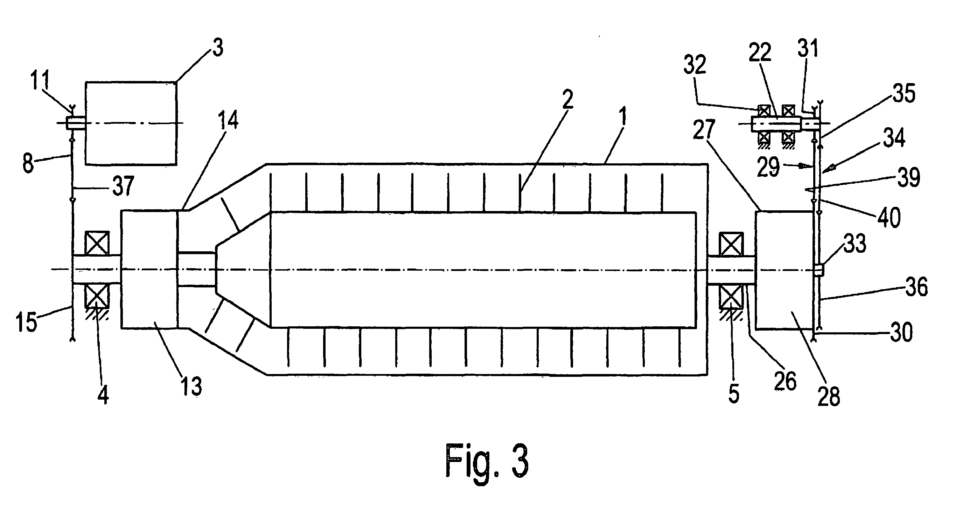

In Fig. 3 erfolgt das Einleiten eines Drehmoments zum Antrieb der Trommel 1 mit dem ersten Riementrieb 8 in eine Trommelnabe 13, welche eine Abtriebswelle 14 zum Antreiben der Trommel 1 aufweist.

Die Trommel 1 nimmt den Spindelabschnitt 26 mit, welcher auf der von der Trommelnabe 13 abgewandten axialen Seite der Trommel 1 eine erste Eingangswelle 27 eines Getriebes 28 auf dieser Seite der Trommel 1 dreht.

Diese Eingangswelle 28 dreht über einen Riementrieb 29 mit der treibenden Riemenscheibe 30 und der getriebenen Riemenscheibe 31 und einem diese Scheiben verbindenden Riemen 39 ferner eine mittels Lagern 32 gelagerte Welle 22.

Von dieser Welle 22 erfolgt eine Rückführung des Drehmoments von der Welle 22 zu dem Getriebe 28 an eine zweite Eingangswelle 33 dieses Getriebes 28 über einen weiteren Riementrieb 34 mit treibender Riemenscheibe 35, getriebener Riemenscheibe 36 und einem diese koppelnden Riemen 40.

Das Getriebe 28 erzeugt in diesem Fall die Differenzdrehzahl zum Antrieb der Schnecke und treibt über eine hier nicht dargestellte Abtriebswelle die Schnecke 2 an.

In den aufgeführten Ausführungsvarianten werden die Vollmantel-Schneckenzentrifuge von nur einem einzigen Antriebsmotor 3 angetrieben.

Erfindungsgemäß erfolgt in diesem Fall jeweils eine Bestimmung des Scheckendrehmoments im Betrieb auf der Basis einer Ermittlung des Schlupfs wenigstens eines Riementriebs Riementriebe (insbesondere 9 und 29 oder 34) oder sämtlicher Riementriebe 8, 9 bzw. 8, 29, 34.

Bei reibschlüssig arbeitenden Riementrieben, z.B. Flach- oder Keilriemen, wird dieser Schlupf durch die Elastizität des Riemens bewirkt.

Der Schlupf hängt bei normalem Betrieb überraschend fast nur von dem übertragenem Drehmoment und der Elastizität des Riemens ab, und nur in geringem Maße von der Vorspannung des Riemens, dem Reibwert Gummi/ Scheibe oder der Drehzahl.

Dabei erfolgen im Folgenden nur eine Betrachtung und eine Messung des Dehnschlupfs.

Durch eine zu niedrige Vorspannung oder zu hohe Drehzahl tritt selbstverständlich sehr starker Schlupf auf, weil die Leistung nicht reibschlüssig übertragen werden kann.

Dabei kommt zu dem Dehnschlupf zusätzlich ein Gleitschlupf hinzu, welcher jedoch im normalen Betrieb vermieden werden soll, da dies auf lange Sicht zum Ausfall des Riemens führen würde.

Für den Schlupf $\psi$ gilt nach folgender Gleichung:

$$\Psi = 1 - \frac{n_2 \cdot d_{w2}}{n_1 \cdot d_{w1}} = 1 - \frac{n_2}{n_1} \cdot i_{12}$$

$n_1$ = (gemessene) Drehzahl der treibenden Riemenscheibe
$n_2$ = (gemessene) Drehzahl der getriebenen Riemenscheibe
$d_{w1}$ = Wirkdurchmesser der treibenden Riemenscheibe
$d_{w2}$ = Wirkdurchmesser der getriebenen Riemenscheibe
$i_{12}$ = tatsächliche Übersetzung.

Somit müssen außer den beiden Drehzahlen der Riemenscheiben entweder der Wirkdurchmesser der beiden Riemenscheiben oder die Übersetzung bekannt sein.

Für das Drehmoment gilt weiter:

$$T = \text{const.} \cdot \psi$$

Aufgrund von Fertigungsabweichungen vom Nennmaß, ist jedoch keine stets gleiche Geometrie der Riemenscheiben gegeben. Zusätzlich ändern sich die Wirkdurchmesser auch bei unterschiedlicher Vorspannung geringfügig. Daher wird die tatsächliche Übersetzung im montierten Zustand bestimmt. Dies geschieht durch eine Messung der beiden Riemenscheibendrehzahlen bei bekanntem Schlupf:

$$i_{12} = (1 - \Psi) \cdot \frac{n_2}{n_1}$$

Es ist vorteilhaft, wenn die Messung zur Bestimmung der Übersetzung zunächst ohne Drehmomentbelastung durchgeführt wird, da hierbei der Schlupf Null ist. Falls dies nicht der Fall ist, so geht der Schlupf bei der Bestimmung der Übersetzung in die Berechnung ein.

In der Praxis muss man zur Bestimmung der tatsächlichen Übersetzung die Dekantierzentrifuge zunächst eine kurze Zeit ohne Produkt betreiben, damit kein Drehmoment am Getriebeabtrieb entsteht. In dieser Phase werden die Drehzahlen $n_1$ und $n_2$ gemessen und gemittelt. Während dieser Phase liegt am Getriebeeingang das Leerlaufmoment des Getriebes an, welches bei der Berechnung der Übersetzung berücksichtigt wird.

Das Leerlaufmoment kann aus Erfahrungswerten gewonnen oder durch Berechnung ermittelt werden.

Die tatsächliche Übersetzung wird sich mit der Zeit aufgrund von Verschleiß der Riemenscheiben und aufgrund von nachlassender Vorspannung ändern. Sie muss daher regelmäßig neu bestimmt werden. Dies ist durch die Alterung, die Dehnung und die Abscheuerung des Riemens 37 bis 40 zu begründen.

Somit ist mit dieser Technik eine einfache Drehmomentsanzeige beispielsweise nach folgendem Schema möglich:

1. Stufe: T< 30%
2. Stufe: 30% <T< 70%
3. Stufe: 70% <T<100%
4. Stufe: Überlast

Die Anzeige kann durch Kontrollfelder und Warnsignale, beispielsweise in Form einer Ampel, erfolgen.

Weitere Messwerte wie Drehzahlen des Hauptmotors 3 und der Getriebeeingangswelle ergänzen die Drehmomentsanzeige und sorgen für zusätzliche Genauigkeit der Anzeige. Sie können ergänzend in die Berechnung des Schlupfs einfließen.

Durch die somit vereinfachte Kontrollüberwachung ist beispielsweise eine Einschätzung der Belastung des Riementriebs und des Riemens oder des Getriebes durch eine kostengünstige Messmimik ermöglicht.

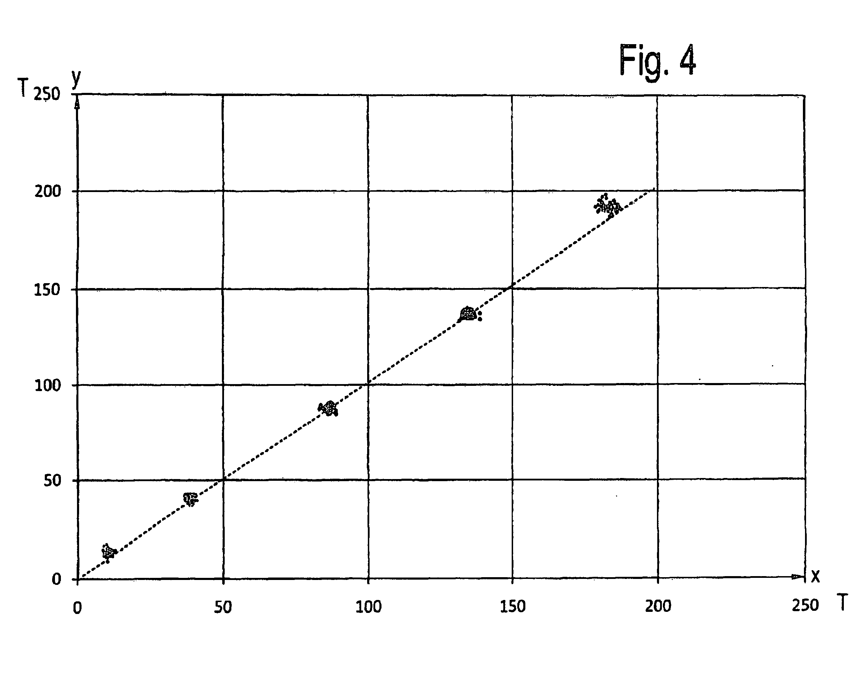

Fig. 4 zeigt einen Vergleich einer Messung (Y) der Drehmomente einer Schnecke 2 mit der erfindungsgemäßen rechnerischen Ermittlung (X) des Drehmomentes. Die Übereinstimmung ist ohne weiteres ersichtlich.

**Bezugszeichen**

| | |
|---|---|
| Trommel | 1 |
| Schnecke | 2 |
| Zentrifugenantrieb | 3 |
| Trommellager | 4, 5 |
| Getriebeanordnung | 6,7 |
| Riementrieb | 8 |
| Riementrieb | 9 |
| Motor | 10 |
| Riemenscheibe | 11 |
| Riemenscheibe | 12 |
| Nabe | 13 |
| Abtriebswelle | 14 |
| Riemenscheibe | 15 |
| Riemenscheibe | 16 |
| Antriebswelle | 17 |
| Maschinengestell | 18 |
| Spindel(abschnitte) | 19 |
| Getriebeeingangswelle | 20 |
| Getriebeeingangswelle | 21 |
| Welle | 22 |
| Abtriebswellen | 23, 24 |
| Welle | 25 |
| Spindelabschnitt | 26 |

(fortgesetzt)

| | |
|---|---|
| Eingangswelle | 27 |
| Getriebe | 28 |
| Riementrieb | 29 |
| Riemenscheiben | 30, 31 |
| Lager | 32 |
| Eingangswelle | 33 |
| Riementrieb | 34 |
| Riemenscheiben | 35, 36 |
| Riemen | 37 - 40 |

**Patentansprüche**

1. Verfahren zum Ermitteln des Drehmomentes einer Schnecke einer eine Trommel und die mit einer Differenzdrehzahl zur Trommel drehbare Schnecke aufweisenden Vollmantelschneckenzentrifuge, die über eine Getriebeanordnung von einem gemeinsamen einzigen Antriebsmotor über einen oder mehrere Riementriebe mit einer treibenden Riemenscheibe, einer getriebenen Riemenscheibe und einem diese koppelnden Riemen angetrieben werden, **dadurch gekennzeichnet, dass** das Drehmoment T über eine Ermittlung des Schlupfs des wenigstens einen Riementriebs bestimmt wird.

2. Verfahren nach Anspruch 1, **dadurch gekennzeichnet, dass** der Schlupf $\psi$ nach folgender Formel ermittelt wird:

$$\Psi = 1 - \frac{n_2 \cdot d_{w2}}{n_1 \cdot d_{w1}} = 1 - \frac{n_2}{n_1} \cdot i_{12} \, ,$$

wobei
$n_1$ = (gemessene) Drehzahl der treibenden Riemenscheibe
$n_2$ = (gemessene) Drehzahl der getriebenen Riemenscheibe
$d_{w1}$ = Wirkdurchmesser der treibenden Riemenscheibe
$d_{w2}$ = Wirkdurchmesser der getriebenen Riemenscheibe
$i_{12}$ = tatsächliche Übersetzung,
wobei $n_1$ , $n_2$, $d_{w1}$ , $d_{w2}$ und $i_{12}$ durch Messung bestimmt werden und das aus diesem Schlupf das Drehmoment T wie folgt ermittelt wird:

$$T = \text{const.} \cdot \psi.$$

3. Verfahren nach Anspruch 1 oder 2, **dadurch gekennzeichnet, dass** zur Bestimmung der tatsächlichen Übersetzung die Dekantierzentrifuge zunächst eine kurze Zeit ohne Produkt betrieben wird und dass in dieser Phase die Drehzahlen $n_1$ und $n_2$ gemessen und gemittelt werden.

4. Verfahren nach Anspruch 2 oder 3, **dadurch gekennzeichnet, dass** bei der Berechnung die Übersetzung des Getriebes berücksichtigt wird.

5. Verfahren nach Anspruch 2, 3 oder 4, **dadurch gekennzeichnet, dass** das Bestimmen der tatsächlichen Übersetzung in Intervallen wiederholt wird.

6. Verfahren nach einem der vorstehenden Ansprüche, **dadurch gekennzeichnet, dass** eine Drehmomentsanzeige.

7. Verfahren nach einem der vorstehenden Ansprüche, **dadurch gekennzeichnet, dass** ferner eine Steuerung oder Regelung der VollmantelSchneckenzentrifuge auf der Basis der Bestimmung des Drehmoments erfolgt.

8. Verfahren nach einem der vorstehenden Ansprüche, **dadurch gekennzeichnet, dass** ferner bei der Bestimmung des Drehmomentes ein Leerlaufdrehmoment bzw. das bei der Bestimmung der Übersetzung $i_{12}$ vorhandene Drehmoment berücksichtigt wird.

## Claims

1. Method for determining the torque of a worm of a solid bowl worm centrifuge, the solid bowl worm centrifuge comprising a rotatable drum and the rotatable worm being rotatable at a different rotational speed from that of the rotatable drum, the rotatable drum and rotatable worm being driven via a gear arrangement by a single shared drive motor via one or more belt drives with a driving belt pulley, a driven belt pulley and a belt coupling the pulleys, **characterised in that** the torque T is determined by determining the slip of the at least one belt drive.

2. Method according to claim 1, **characterised in that** the slip $\psi$ is determined according to the following formula:

$$\Psi = 1 - \frac{n_2 \cdot d_{w2}}{n_1 \cdot d_{w1}} = 1 - \frac{n_2}{n_1} \cdot i_{12} \, .$$

wherein:

$n_1$ = (measured) rotational speed of the driving belt pulley
$n_2$ = (measured) rotational speed of the driven belt pulley
$d_{w1}$ = active diameter of the driving belt pulley
$d_{w2}$ = active diameter of the driven belt pulley
$i_{12}$ = actual step-up,
wherein $n_1$, $n_2$, $d_{w1}$, $d_{w2}$ and $i_{12}$ are determined by measurement and the torque T is determined from this slip as follows:

$$T = \text{const. } \psi.$$

3. Method according to claim 1 or 2, **characterised in that**, for the determination of the actual step-up, the decanting centrifuge is initially operated for a short time without any product and the rotational speeds $n_1$ and $n_2$ are measured and averaged in this phase.

4. Method according to claim 2 or 3, **characterised in that** the step-up of the gear is taken into consideration in this calculation.

5. Method according to claim 2, 3 or 4, **characterised in that** the determination of the actual step-up is repeated at intervals.

6. Method according to one of the preceding claims, **characterised by** a torque display.

7. Method according to one of the preceding claims, **characterised in that** furthermore a control or regulation of the solid bowl worm centrifuge is carried out on the basis of the determination of the torque.

8. Method according to one of the preceding claims, **characterised in that** furthermore an idling torque or the torque present when the actual step-up $i_{12}$ is determined is taken into consideration in the determination of the torque.

## Revendications

1. Procédé servant à déterminer le couple d'une vis d'une centrifugeuse à vis à bol plein présentant un tambour et la vis pouvant tourner à une vitesse différentielle par rapport au tambour, laquelle centrifugeuse est entraînée par l'intermédiaire d'un ensemble de transmission d'un moteur d'entraînement unique commun, par l'intermédiaire d'un ou de plusieurs organes d'entraînement à courroie dotés d'une poulie à courroie menante, d'une poulie à courroie menée et d'une courroie couplant ces dernières, **caractérisé en ce que** le couple T est défini par l'intermédiaire d'une détermination du glissement du au moins un organe d'entraînement à courroie.

2. Procédé selon la revendication 1, **caractérisé en ce que** le glissement $\Psi$ est déterminé selon la formule qui suit :

$$\Psi = 1 - \frac{n_2 \cdot d_{w2}}{n_1 \cdot d_{w1}} = 1 - \frac{n_2}{n_1} \cdot i_{12}$$

sachant que
$n_1$ = vitesse de rotation (mesurée) de la poulie à courroie menante,
$n_2$ = vitesse de rotation (mesurée) de la poulie à courroie menée,
$d_{w1}$ = diamètre actif de la poulie à courroie menante,
$d_{w2}$ = diamètre actif de la poulie à courroie menée,
$i_{12}$ = rapport réel de démultiplication,
sachant que $n_1$, $n_2$, $d_{w1}$, $d_{w2}$ et $i_{12}$ sont définis par une mesure et sachant que le couple T est déterminé comme suit à partir dudit glissement :

$$T = \text{const.} \cdot \psi .$$

3. Procédé selon la revendication 1 ou 2, **caractérisé en ce que** pour définir le rapport réel de démultiplication, la centrifugeuse de décantation fonctionne dans un premier temps un court temps sans produit, et **en ce que** lors de cette phase les vitesses $n_1$ et $n_2$ sont mesurées et pondérées.

4. Procédé selon la revendication 2 ou 3, **caractérisé en ce que** lors du calcul, on tient compte du rapport de démultiplication de la transmission.

5. Procédé selon la revendication 2, 3 ou 4, **caractérisé en ce qu'**on répète à certains intervalles l'étape consistant à définir le rapport réel de démultiplication.

6. Procédé selon l'une quelconque des revendications précédentes, **caractérisé par** un affichage du couple.

7. Procédé selon l'une quelconque des revendications précédentes, **caractérisé en ce qu'**en outre est effectué(e) une commande ou un réglage de la centrifugeuse à vis à bol plein sur la base de la définition du couple.

8. Procédé selon l'une quelconque des revendications précédentes, **caractérisé en ce qu'**en outre on tient compte lors de la définition du couple d'un couple lors d'un fonctionnement à vide, ou **en ce qu'**on tient compte du couple présent lors de la définition du rapport de démultiplication $i_{12}$.

Fig. 1

Fig. 2

Fig. 3

EP 2 435 188 B1

Fig. 4

**IN DER BESCHREIBUNG AUFGEFÜHRTE DOKUMENTE**

**In der Beschreibung aufgeführte Patentdokumente**

- DE 4107485 A